# FASCICULE DE BREVET EUROPEEN

(11) **EP 4 020 331 B1**
(45) Date de publication et mention de la délivrance du brevet: **13.05.2026**
(21) Numéro de dépôt: 21214324.2
(22) Date de dépôt: 14.12.2021
(51) Int. Cl.: G06N 3/091, G06N 3/045, G06N 3/09, G06F 40/169, G06N 3/044, G06N 3/0464, G06N 20/10, G06N 20/20

(54) **PROCEDE ET SYSTEME D'APPRENTISSAGE ACTIF ET D'ANALYSE AUTOMATIQUE DE DOCUMENTS**
VERFAHREN UND SYSTEM ZUM AKTIVEN LERNEN UND ZUR AUTOMATISCHEN ANALYSE VON DOKUMENTEN
METHOD AND SYSTEM FOR ACTIVE LEARNING AND AUTOMATIC ANALYSIS OF DOCUMENTS

(30) Priorité: 18.12.2020 FR 2013638
(43) Date de publication de la demande: 29.06.2022
(73) Titulaire: Airbus Defence and Space SAS, 31402 Toulouse Cedex 4 (FR)
(72) Inventeur: GUELORGET, Paul, 78997 Elancourt (FR); GRILHERES, Bruno, 78997 Elancourt (FR); ZAHARIA, Titus, 78997 Elancourt (FR)
(74) Mandataire: Cabinet Le Guen Maillet

(56) Documents cités:
- US-A1- 2020 202 171
- ABUELWAFA SHERIF ET AL.: "Unsupervised Exemplar-Based Learning for Improved Document Image Classification", IEEE ACCESS, vol. 7, 18 September 2019 (2019-09-18), pages 133738 - 133748, XP011747575, DOI: 10.1109/ACCESS.2019.2940884
- CARDOSO THIAGO N C ET AL: "Ranked batch-mode active learning", INFORMATION SCIENCES, AMSTERDAM, NL, vol. 379, 28 October 2016 (2016-10-28), pages 313 - 337, XP029813470, ISSN: 0020-0255, DOI: 10.1016/J.INS.2016.10.037

## Description

La présente invention concerne le domaine de l'apprentissage actif et l'analyse automatique de documents telle que le domaine de la classification par réseaux de neurones artificiels.

### ETAT DE LA TECHNIQUE ANTERIEURE

Dans le cadre d'opérations d'analyse automatique de documents (tout ensemble formatté de données, par exemple, texte, image, audio et/ou vidéo), telles que des opérations de classification automatique de documents, l'apprentissage actif (« active learning » en anglais) est une technique visant à échantillonner des documents de classe inconnue a priori (donc des documents dits « non-annotés »), pour les soumettre à un expert humain, appelé « oracle ». Tous les documents non-annotés qui sont injectés en entrée pour l'apprentissage d'un modèle d'apprentissage machine, tel qu'un réseau de neurones artificiel ou une machine à vecteurs de support SVM (« Support Vector Machine » en anglais), ne sont pas soumis à l'oracle pour classification manuelle. Seulement un sous-ensemble de ces documents est choisi automatiquement afin d'être annotés (donc classés) par l'oracle. On parle d'apprentissage « semi-supervisé ». Cela permet d'utiliser essentiellement des documents non-annotés (on parle aussi de documents « non-étiquetés ») pour l'apprentissage, réduisant de ce fait l'intervention humaine, ainsi que le coût et la rapidité de mise en place d'un classifieur efficace.

Pour solliciter de la manière la plus pertinente possible l'intervention de l'oracle, le système effectue une prédiction de classification des documents non-annotés et détermine typiquement un score d'informativité du document et d'incertitude de classification. Le système se sert alors de ce score pour ordonnancer les documents non-annotés, ce qui permet de soumettre à l'oracle les documents non-annotés dont l'annotation doit théoriquement apporter le plus de bénéfices à l'apprentissage.

Bien que l'apprentissage actif permette d'accélérer la mise en place d'un classifieur efficace en minimisant les ressources humaines nécessaires pour l'annotation des documents, il demeure que l'apprentissage nécessite aujourd'hui successivement de : (a) effectuer un entraînement du modèle d'apprentissage machine, (b) analyser la classification automatique des documents non-annotés, (c) échantillonner les documents non-annotés, (d) annoter un ou plusieurs documents, (e) ajouter de nouveaux documents en entrée de l'apprentissage et réitérer les étapes (a) à (d) jusqu'à stabilisation de la configuration du modèle d'apprentissage machine et validation grâce à un jeu dédié de documents annotés. Dans un tel processus successif, l'étape (d) est particulièrement limitante, puisque chronophage et soumise à la disponibilité de l'oracle. A noter, en outre, que la constitution du jeu de validation implique aussi un coût en annotation.

Le document US 2020/0202171 A1 décrit des systèmes et des méthodes pour construire, gérer et partager rapidement des modèles d'apprentissage automatique.

Outre le défaut de rester chronophage, l'apprentissage impose à un fournisseur de systèmes d'intelligence artificielle de travailler étroitement avec les utilisateurs finaux de ces systèmes pour faire évoluer la configuration du modèle d'apprentissage machine vers une meilleure performance et pour prendre en compte de nouveaux types de données (e.g., pour gérer la saisonnalité dans des prises de vue, pour introduire de nouveaux schémas de données à reconnaître...). Or ces systèmes peuvent être destinés à traiter des documents confidentiels et il est donc souhaitable de fournir une solution qui permette de générer automatiquement et de mettre à disposition le meilleur modèle disponible au fil de l'utilisation du modèle d'apprentissage machine, sans avoir recours à une nouvelle intervention du fournisseur de systèmes d'intelligence artificielle. Ainsi, la confidentialité des documents traités serait plus aisément assurée. Il est aussi souhaitable de fournir une solution qui soit simple à mettre en place et à moindre coût, et qui puisse surtout être mise en œuvre par un utilisateur non-expert de l'apprentissage automatique.

### EXPOSE DE L'INVENTION

Il est proposé un procédé implémenté par un système d'apprentissage actif et d'analyse automatique, le procédé exécutant en parallèle un mode d'apprentissage et un mode de production, le mode de production incluant : répondre à des sollicitations d'analyse automatique de documents en utilisant un modèle d'apprentissage machine entraîné avec des documents annotés. Et le mode d'apprentissage inclut : recevoir et stocker des documents non-annotés ; mettre à jour un descripteur, stocké en association avec les documents non-annotés, avec des informations relatives à une prédiction, selon le modèle utilisé en mode de production, d'analyse automatique desdits documents non-annotés ; échantillonner les documents non annotés stockés dont le descripteur a été mis à jour selon le modèle utilisé en mode de production, et déterminer un ordonnancement, selon les informations relatives à la prédiction d'analyse automatique, des documents non-annotés échantillonnés pour annotation par un oracle ; répartir les documents annotés entre documents à utiliser en entraînement pour entraîner au moins un modèle d'apprentissage machine candidat et documents à utiliser en validation pour comparer les performances dudit au moins un modèle d'apprentissage machine candidat avec le modèle utilisé en mode de production ; entraîner ledit (au moins un) modèle d'apprentissage machine candidat de structure aléatoire, et lorsque le modèle d'apprentissage machine candidat entraîné montre de meilleures performances en validation que le modèle utilisé en mode de production, remplacer le modèle utilisé en mode de production par un modèle correspondant au modèle d'apprentissage machine candidat entraîné et réitérer en mettant à jour le descripteur selon le modèle remplaçant. Lesdits documents sont des images et ladite analyse automatique est une reconnaissance d'au moins un type d'objet dans lesdites images.

Lorsqu'un document est nouvellement annoté avec une annotation A, le procédé comprend : calculer un premier score qui rend compte de la proximité entre un ratio de consigne R et le ratio actuel pour cette annotation A, les ratios étant représentatifs du nombre de documents annotés utilisés en validation par rapport au nombre total de documents annotés ; calculer un deuxième score relatif au manque de représentation de l'annotation A dans les documents utilisés en validation ; déterminer si le document nouvellement annoté est à utiliser en entraînement ou en validation en fonction de ces premier et deuxième scores.

Ainsi, l'utilisateur (en mode de production) dispose toujours du meilleur modèle disponible pour sa tâche d'analyse automatique. Le modèle utilisé est continuellement et automatiquement amélioré, et la répartition des documents annotés entre entraînement et validation est automatiquement réalisée lorsque de nouveaux documents annotés sont disponibles.

Selon un mode de réalisation particulier, le procédé inclut : sur remplacement du modèle utilisé en mode de production, interrompre toute opération en cours concernant la mise à jour des descripteurs et l'échantillonnage selon le modèle remplacé.

Selon un mode de réalisation particulier, le procédé inclut : effectuer un pré-traitement sur réception des documents non annotés, qui récupère des cartes d'activation obtenues selon une partie pré-entraînée qui est commune aux modèles d'apprentissage machine et qui est appliquée aux documents non annotés reçus, et inscrit, dans les descripteurs associés auxdits documents non-annotés des vecteurs de représentation (« embeddings » en anglais) résultant de ladite partie pré-entraînée.

Selon un mode de réalisation particulier, le procédé inclut : créer plusieurs instances d'entraînement qui opèrent en parallèle pour entraîner des modèles d'apprentissage machine de structures aléatoires différentes.

Selon un mode de réalisation particulier, le procédé inclut : créer plusieurs instances d'analyse automatique qui opèrent en parallèle avec le modèle utilisé en mode de production, pour répartir des opérations de mise à jour des descripteurs en mode d'apprentissage et des opérations de réponse à des sollicitations d'analyse automatique de documents en mode de production.

Selon un mode de réalisation particulier, le procédé est tel que plus la constitution de l'ordonnancement avance, plus les documents déjà ordonnancés sont considérés comme annotés pour mettre à jour un apport en diversité dans un score d'informativité et d'incertitude.

Selon un mode de réalisation particulier, l'analyse automatique est une classification.

Il est également proposé un programme d'ordinateur, qui peut être stocké sur un support et/ou téléchargé d'un réseau de communication, afin d'être lu par un processeur. Ce programme d'ordinateur comprend des instructions pour implémenter le procédé mentionné ci-dessus dans l'un quelconque de leurs modes de réalisation, lorsque ledit programme est exécuté par le processeur. Il est également proposé un support de stockage d'informations stockant un tel programme d'ordinateur.

Il est aussi proposé un système d'apprentissage actif et d'analyse automatique incluant de la circuiterie électronique configurée pour exécuter en parallèle un mode d'apprentissage et un mode de production, le mode de production incluant : répondre à des sollicitations d'analyse automatique de documents en utilisant un modèle d'apprentissage machine entraîné avec des documents annotés. Et le mode d'apprentissage inclut : recevoir et stocker des documents non-annotés ; mettre à jour un descripteur, stocké en association avec les documents non-annotés, avec des informations relatives à une prédiction, selon le modèle utilisé en mode de production, d'analyse automatique desdits documents non-annotés ; échantillonner les documents non annotés stockés dont le descripteur a été mis à jour selon le modèle utilisé en mode de production, et déterminer un ordonnancement, selon les informations relatives à la prédiction d'analyse automatique, des documents non-annotés échantillonnés pour annotation par un oracle ; répartir les documents annotés entre documents à utiliser pour entraîner au moins un modèle d'apprentissage machine candidat et documents à utiliser pour comparer les performances dudit au moins un modèle d'apprentissage machine candidat avec le modèle utilisé en mode de production ; entraîner ledit au moins un modèle d'apprentissage machine candidat de structure aléatoire, et lorsque le modèle d'apprentissage machine candidat entraîné montre de meilleures performances en validation que le modèle utilisé en mode de production, remplacer le modèle utilisé en mode de production par le modèle d'apprentissage machine candidat entraîné et réitérer en mettant à jour le descripteur selon le modèle remplaçant Lesdits documents sont des images et ladite analyse automatique est une reconnaissance d'au moins un type d'objet dans lesdites images. Le système d'apprentissage comporte en outre de la circuiterie électronique configurée pour, lorsqu'un document est nouvellement annoté avec une annotation A :
- calculer un premier score qui rend compte de la proximité entre un ratio de consigne *R* et le ratio actuel pour cette annotation A, les ratios étant représentatifs du nombre de documents annotés utilisés en validation par rapport au nombre total de documents annotés ;
- calculer un deuxième score relatif au manque de représentation de l'annotation A dans les documents utilisés en validation
- déterminer si le document nouvellement annoté est à utiliser en entraînement ou en validation en fonction de ces premier et deuxième scores.

### BREVE DESCRIPTION DES DESSINS

Les caractéristiques de l'invention mentionnées ci-dessus, ainsi que d'autres, apparaîtront plus clairement à la lecture de la description suivante d'au moins un exemple de réalisation, ladite description étant faite en relation avec les dessins joints, parmi lesquels :
[Fig. 1] illustre schématiquement une architecture modulaire d'un système d'apprentissage actif ;
[Fig. 2] illustre schématiquement une répartition de documents annotés dans une base de données dédiée ;
[Fig. 3] illustre schématiquement un exemple d'architecture matérielle permettant d'implémenter l'architecture modulaire de la Fig. 1 ;
[Fig. 4] illustre schématiquement un algorithme de classifieur utilisé dans l'architecture modulaire de la Fig. 1 ;
[Fig. 5] illustre schématiquement un algorithme d'échantillonneur utilisé dans l'architecture modulaire de la Fig. 1 ;
[Fig. 6] illustre schématiquement un algorithme de répartition de documents annotés dans la base de données dédiée ; et
[Fig. 7] illustre schématiquement un algorithme de construction et d'évaluation d'un nouveau modèle de réseau de neurones artificiel visant à remplacer un modèle en cours d'utilisation par le classifieur.

### EXPOSE DETAILLE DE MODES DE REALISATION

L'invention concerne un même système qui en parallèle mène un mode d'apprentissage et un mode de production d'analyse automatique de documents grâce à une technologie d'apprentissage machine (« machine learning » en anglais). L'analyse automatique peut être de la classification, de l'extraction d'information, de la transcription automatique de la parole...

Par souci illustratif, la suite de la description est détaillée dans un cadre d'analyse automatique sous forme de classification et prend donc l'exemple détaillé d'un système d'apprentissage actif et de classification 100 à base de réseaux de neurones artificiels. Toutefois d'autres tâches d'analyse automatique peuvent être réalisées de manière similaire, et d'autres modèles d'apprentissage machines peuvent être utilisés, comme par exemple des machines à vecteurs de support SVM.

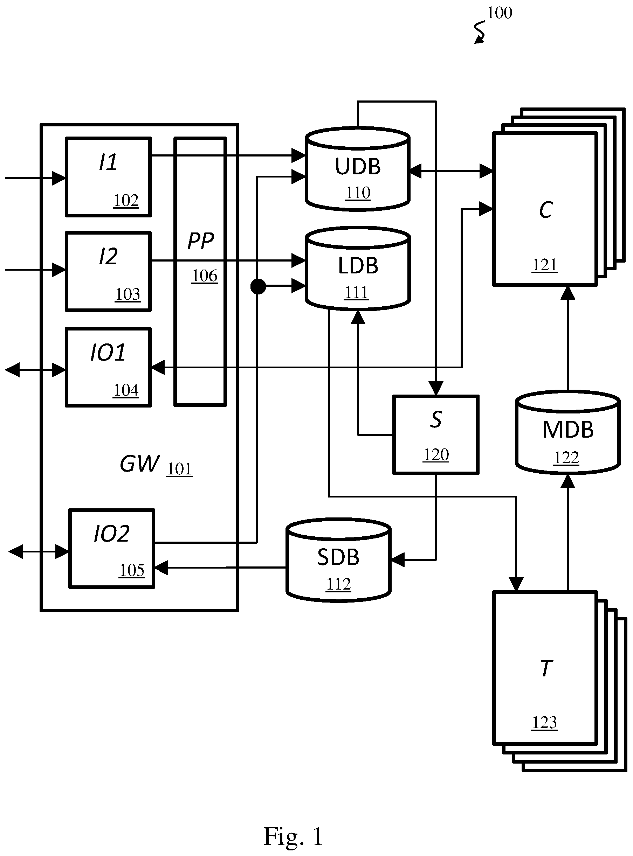

La **Fig. 1** illustre ainsi schématiquement une architecture modulaire du système d'apprentissage actif et de classification 100 qui exécute en parallèle un mode d'apprentissage et un mode de production. En d'autres termes, le système d'apprentissage actif et de classification 100 fournit en continu des services d'apprentissage et des services de classification à la demande.

Le système d'apprentissage actif et de classification 100 inclut une passerelle GW 101 (« gateway » en anglais) permettant d'interagir avec l'extérieur dudit système.

La passerelle GW 101 comporte ainsi une première interface d'entrée I1 102 destinée à recevoir des documents non-annotés pour l'apprentissage actif du système (mode d'apprentissage).

La passerelle GW 101 comporte aussi une seconde interface d'entrée I2 103 destinée à recevoir des documents déjà annotés pour l'apprentissage actif du système (mode d'apprentissage).

La passerelle GW 101 comporte aussi une première interface d'entrée/sortie IO1 104 destinée à recevoir des documents à classifier grâce au modèle de réseau de neurones artificiel le plus à jour disponible et destinée à fournir un résultat de classification des documents en question (mode de production).

La passerelle GW 101 comporte aussi une deuxième interface d'entrée/sortie IO1 105 destinée à soumettre à un oracle des documents à annoter (i.e., à classer manuellement) et destinée à recevoir une instruction de l'oracle en retour (mode d'apprentissage). L'instruction peut être d'annoter le document soumis de telle ou telle manière, ou de supprimer le document du système. Dans ce dernier cas, cela signifie que l'oracle considère que le document n'est pas pertinent pour l'apprentissage recherché.

La passerelle GW 101 comporte aussi préférentiellement un module de pré-traitement PP 106 (« pre-processing » en anglais). Les documents non-annotés reçus par la première interface d'entrée I1 102 sont traités par le module de pré-traitement PP 106. Les documents annotés reçus par la seconde interface d'entrée I2 103 peuvent être traités par le module de pré-traitement PP 106.

Dans une mode de réalisation particulier, le module de pré-traitement PP 106 repose sur un réseau de neurones artificiel. Un réseau de neurones artificiel est typiquement formé par une couche d'entrée pour injecter des documents en entrée, une couche de sortie pour fournir des résultats de classification des documents injectés en entrée, et entre elles, des couches cachées où le calcul est effectué pour permettre la classification. Chaque couche cachée applique des filtres sur ses entrées, afin d'obtenir des cartes d'activation (appelées « features maps » en anglais) qui sont utilisées en entrée de la couche suivante. Dans chaque couche, plusieurs filtres peuvent être enchaînés (« daisy-chained » en anglais). Par exemple, une couche L peut appliquer un filtre convolutif sur la sortie de la carte d'activation issue de la couche précédente L-1, de manière à obtenir une première carte d'activation, et appliquer un filtre de sous-échantillonnage pour obtenir une seconde carte d'activation à partir de ladite première carte d'activation, qui est ensuite fournie en sortie vers la couche suivante L + 1. Ainsi, par applications successives de filtres sur des documents injectés en entrée, le réseau de neurones artificiel analyse lesdits documents, et en effectue par exemple une classification.

La configuration des couches cachées de chaque modèle de réseau de neurones artificiel utilisé dans le cadre du système d'apprentissage actif et de classification 100 peut se répartir en une partie pré-entraînée et une partie auto-entraînée. La partie pré-entraînée est la même pour tous les modèles de réseaux de neurones artificiels utilisés dans le cadre du système d'apprentissage actif et de classification 100. Elle est typiquement livrée par le fournisseur de systèmes d'intelligence artificielle, et correspond à un apprentissage générique pour le domaine d'utilisation du système d'apprentissage actif et de classification 100 : types d'objets à reconnaître dans des images, ou, selon un mode de réalisation non compris dans la portée des revendications, types de textes à classifier... Le reste de l'apprentissage est alors une spécialisation de l'analyse automatique souhaitée (par exemple, modèles de bateaux à reconnaître dans des images satellite...), et est alors effectué par l'utilisateur final du système d'apprentissage actif et de classification 100. L'utilisateur final peut ainsi aisément effectuer un apprentissage actif sans être expert du domaine et sans avoir à dévoiler au fournisseur de systèmes d'intelligence artificielle des documents, nécessaires à l'entraînement ou à la validation, qui auraient un caractère confidentiel.

Dans une mode de réalisation particulier, le module de pré-traitement PP 106 dispose d'un réseau de neurones artificiel adapté pour lui permettre de récupérer les cartes d'activation de la partie pré-entraînée et d'en dériver un vecteur de représentation, appelé « embedding ». Ces vecteurs de représentation résultent de transpositions (« mapping » en anglais) de documents d'entrée en vecteurs de nombres continus de faible dimension. Cette approche permet de réduire la dimensionnalité de variables catégorielles, telles qu'elles sont contenues dans les documents d'entrée, et l'espace vectoriel fournit un outil efficace de recherche des similarités.

Le module de pré-traitement PP 106 est alors configuré pour associer, avec les documents qui lui sont fournis en entrée, les vecteurs de représentation (« embeddings ») résultant de ladite partie pré-entraînée. On parle ici de vecteurs de représentation « fixes ». Cela permet d'accélérer la mise à jour, telle que décrite ci-après, de descripteurs stockés conjointement avec les documents en question, et d'accélérer les entraînements grâce à ladite partie pré-entraînée.

Le module de pré-traitement PP 106 est en outre préférentiellement configuré pour aussi traiter les documents à classifier reçus par la première interface d'entrée/sortie IO1 104. Ainsi, cela permet à un classifieur C 121, décrit ci-après et utilisé en parallèle pour les modes d'apprentissage et production, de ne s'intéresser qu'à la partie auto-entraînée.

Le système d'apprentissage actif et de classification 100 comporte, en outre, un espace de stockage destiné à stocker les documents fournis par les interfaces d'entrée I1 102 et I2 103 et des information associées, telles que des descripteurs, et à stocker le modèle à utiliser pour la classification (mode de production) et potentiellement un historique de modèles précédemment utilisés par le système d'apprentissage actif et de classification 100.

Selon un premier exemple, tel qu'illustré sur la Fig. 1, cet espace de stockage prend la forme d'un ensemble comportant une première base de données UDB 110, une deuxième base de données LDB 111, une troisième base de données SDB 112 et une quatrième base de données MDB 122. La première base de données UDB 110 est destinée à stocker les documents non-annotés fournis par l'interface d'entrée I1 102 et qui n'ont pas été soumis à annotation par l'oracle. La deuxième base de données LDB 111 est destinée à stocker les documents annotés, c'est-à-dire ceux fournis par l'interface d'entrée I2 103 et ceux qui ont été annotés par l'oracle. La troisième base de données SDB 112 est destinée à stocker les documents échantillonnés, parmi les documents non-annotés de la première base de données UDB 110, qui sont ordonnancés pour éventuelle soumission à l'oracle. La quatrième base de données MDB 122 est destinée à stocker le modèle à utiliser pour la classification (mode de production), c'est-à-dire le meilleur modèle disponible, et potentiellement l'historique de modèles précédemment utilisés par le système d'apprentissage actif et de classification 100. La quatrième base de données MDB 122 peut stocker des informations complémentaires en association avec l'historique de modèles précédemment utilisés, comme par exemple des informations de performances atteintes avec de tels documents annotés comme jeu de validation.

Selon un deuxième exemple, la première base de données UDB 110, la deuxième base de données LDB 111 et la troisième base de données SDB 112 peuvent former une seule base de données stockant tous les documents fournis par les interfaces d'entrée I1 102 et I2 103, qu'ils soient donc annotés ou non. A chaque document est alors associé un ensemble de drapeaux (« flags » en anglais) ou variables. Un drapeau peut indiquer si le document est annoté ou s'il ne l'est pas. Si le document est non-annoté, un autre drapeau peut indiquer s'il a été échantillonné et en attente de soumission à l'oracle. Si le document est annoté, encore un autre drapeau peut indiquer si le document est à utiliser pour l'entraînement ou la validation de réseaux de neurones artificiels.

Le système d'apprentissage actif et de classification 100 comporte en outre un échantillonneur S 120 (« sampler » en anglais). L'échantillonneur S 120 est configuré pour prélever, dans la première base de données UDB 110, des documents non-annotés, et pour les ordonnancer dans la troisième base de données SDB 112 selon un score d'informativité du document et d'incertitude d'analyse automatique (e.g., de classification).

L'informativité est liée à la représentativité par rapport aux documents non-annotés et/ou la diversité par rapport aux documents annotés. L'informativité représente un degré d'apport d'expérience dans l'apprentissage par le document considéré. A ce titre, l'informativité pourrait aussi inclure l'incertitude d'analyse automatique. Le parti a été pris ici de considérer l'incertitude d'analyse automatique comme un critère distinct de l'informativité.

Ainsi, quand l'oracle est disponible, des documents à annoter lui sont soumis via l'interface d'entrée/sortie IO2 105, selon l'ordonnancement établi par l'échantillonneur S 120. L'oracle annote les documents, c'est-à-dire que l'oracle les classe manuellement, ou instruit de les supprimer du système d'apprentissage actif et de classification 100 et notamment de la première base de données UDB 110. Ainsi, la sollicitation de l'oracle fait progresser l'apprentissage de manière efficace, en obtenant une annotation supervisée pour des documents qui ont été choisis pour leur capacité à faire progresser les modèles de réseaux de neurones artificiels ou en excluant des documents non pertinents pour la classification recherchée et qui détournent donc l'apprentissage de son objectif.

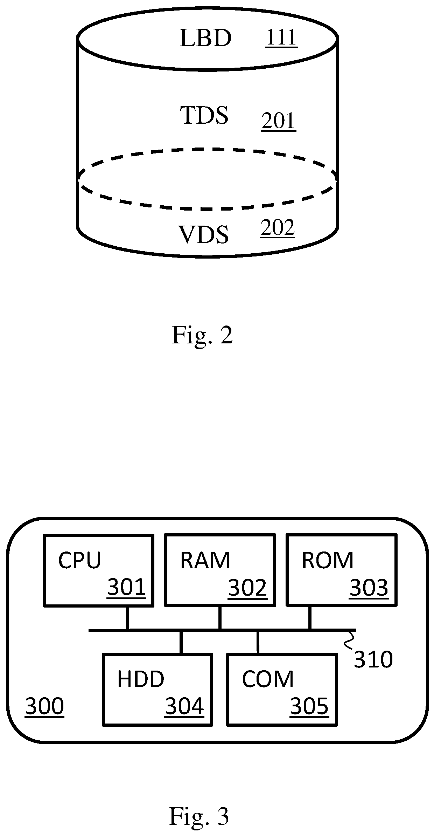

L'échantillonneur S 120 est en outre configuré pour répartir les documents annotés, dans la deuxième base de données LDB 111, entre documents à utiliser pour l'entraînement et documents à utiliser pour la validation. Ainsi, comme schématiquement illustré sur la **Fig. 2****,** la deuxième base de données LDB 111 est composée d'un premier ensemble TDS 201 de documents annotés qui sont affectés à l'entraînement de réseaux de neurones artificiels, et d'un second ensemble VDS 202 de documents annotés qui sont affectés à la validation de réseaux de neurones artificiels entraînés. L'échantillonneur S 120 décide de l'affectation des documents annotés à l'entraînement ou à la validation. L'échantillonneur S 120 peut revenir sur une décision d'affecter un document annoté à la validation pour le transférer à l'entraînement. L'inverse n'est par contre pas souhaitable, car un modèle de réseau de neurones artificiel ayant été entraîné avec un document annoté est avantagé en termes de performance si ce document annoté est utilisé lors de la validation.

Le système d'apprentissage actif et de classification 100 comporte en outre au moins un entraîneur T 123. L'entraîneur T 123 est configuré pour entraîner au moins un réseau de neurones artificiel de structure aléatoire en utilisant le premier ensemble TDS 201 de documents annotés de la deuxième base de données LDB 111. L'entraîneur T 123 est en outre configuré pour comparer les performances du meilleur modèle disponible (celui utilisé en mode de production, c'est-à-dire le dernier stocké dans la quatrième base de données MDB 122) avec les performances de chaque réseau de neurones artificiel de structure aléatoire qui a été entraîné. L'entraîneur T 123 est configuré pour évaluer ces performances, en termes de classification, en utilisant le second ensemble VDS 202 de documents annotés de la deuxième base de données LDB 111. L'entraîneur T 123 est configuré pour mettre à jour la quatrième base de données MDB 122 lorsque le modèle de réseau de neurones artificiel nouvellement entraîné montre de meilleures performances que le meilleur possible obtenu jusqu'alors, c'est-à-dire celui utilisé en mode de production.

L'entraîneur T 123 peut être un ensemble d'instances d'entraînement qui opèrent en parallèle et qui entraînent des réseaux de neurones artificiels de structures aléatoires différentes. Ainsi, plusieurs modèles alternatifs peuvent être évalués en concurrence.

Il convient de noter que l'évaluation des performances par l'entraîneur T 123 pour différents modèles de réseaux de neurones artificiels sont basés sur le même jeu de documents de validation. En d'autres termes, dès lors que le second ensemble VDS 202 de documents annotés a été mis à jour, les performances du modèle le meilleur possible tel qu'utilisé en production doivent être réévaluées avec le second ensemble VDS 202 de documents annotés mis à jour, de sorte que la comparaison avec un ou plusieurs modèles de réseaux de neurones artificiels de structures aléatoires nouvellement entraînés soit probante.

Le système d'apprentissage actif et de classification 100 comporte en outre au moins un classifieur C 121. Le classifieur C 121 est configuré pour utiliser, que ce soit en mode de production ou en mode d'apprentissage, un réseau de neurones artificiel agencé selon le meilleur modèle disponible, c'est-à-dire celui fourni en dernier dans la quatrième base de données MDB 122. En mode d'apprentissage, le classifieur C 121 est en charge de calculer les vecteurs de représentation (« embeddings »), selon ledit meilleur modèle disponible, des documents non-annotés stockés dans la première base de données UDB 110 et de mettre en conséquence à jour leurs descripteurs, qui sont stockés conjointement avec les documents en question. Lorsque le module de pré-traitement PP 106 a fourni des vecteurs de représentations (« embeddings ») fixes, le classifieur C 121 est en charge de calculer des vecteurs de représentation (« embeddings ») dits dynamiques, qui correspondent à la partie mouvante du modèle utilisé. Ces descripteurs incluent alors une information (telle qu'un identifiant horodaté) représentative du modèle qui a servi à les calculer et des informations relatives à une prédiction de classification (plus généralement, d'analyse automatique) par le classifieur C 121 desdits documents non-annotés. Ces informations relatives à la prédiction sont préférentiellement les vecteurs de représentation calculés, la classification (plus généralement, le résultat d'analyse) obtenue et des informations d'incertitude (e.g., entropie) correspondante. Ces descripteurs permettent en outre d'inclure les drapeaux susmentionnés.

Dans le cas où le module de pré-traitement PP 106 est configuré pour associer, avec les documents qui lui sont fournis en entrée, les vecteurs de représentation (« embeddings ») fixes résultant de la partie pré-entraînée déjà mentionnée, qui est commune à l'ensemble des modèles utilisés, le classifieur C 121 est en charge de calculer les vecteurs de représentation (« embeddings ») dynamiques résultant de la partie auto-entraînée (qui diffère d'un modèle à l'autre).

Le classifieur C 121 est configuré pour classifier (mode de production) des documents qui seraient soumis via l'interface d'entrée/sortie IO1 104. Ainsi, le système d'apprentissage actif et de classification 100 fournit, à la demande, une classification de documents (intrinsèquement non-annotés) en utilisant le meilleur modèle disponible.

Le classifieur C 121 peut être un ensemble d'instances de classification qui opèrent en parallèle avec un même modèle de réseau de neurones artificiels pour répartir les tâches d'analyse automatique à réaliser en mode d'apprentissage et en mode de production. Par exemple, plusieurs instances se répartissent les opérations de mise à jour des descripteurs (descripteurs vierges des nouveaux documents, descripteurs rendus obsolètes par l'emploi d'un nouveau modèle en mode de production) dans la première base de données UDB 110, et sont réquisitionnées à tour de rôle pour traiter des demandes de classification soumises via l'interface d'entrée/sortie IO1 104. Selon un autre exemple, une première instance peut être en charge de répondre aux sollicitations extérieures soumises via l'interface d'entrée/sortie IO1 104, une seconde instance peut être en charge de mettre à jour les descripteurs d'une partie de la première base de données UDB 110 et au moins une troisième instance peut être en charge de mettre à jour les descripteurs du reste de la première base de données UDB 110.

Lorsqu'un nouveau modèle plus performant est disponible dans la quatrième base de données MDB 122, l'entraîneur est configuré pour envoyer une notification correspondante au classifieur C 121, afin d'interrompre toute opération de mise à jour de descripteurs qui serait en cours et de déclencher une mise à jour des descripteurs associés aux documents non-annotés dans la première base de données UDB 110 selon ledit nouveau modèle, ainsi qu'à l'échantillonneur S 120, afin de reprendre l'échantillonnage avec des documents non-annotés dont les descripteurs associés ont été mis à jour selon ledit nouveau modèle. Lorsqu'un nouveau document annoté est apporté au système, que ce soit via l'interface d'entrée I2 103 ou via l'interface d'entrée/sortie IO2 105, la passerelle GW 101 envoie une notification correspondante à l'échantillonneur S 120, afin que ce nouveau document annoté soit affecté à l'entraînement ou à la validation.

Les notifications susmentionnées et les échanges entre les modules (bases de données...) du système d'apprentissage actif et de classification 100 peuvent être réalisés selon un protocole propriétaire ou selon un protocole standard. Par exemple, un mécanisme de type agent de messages (« message broker » en anglais) peut être utilisé.

Dans un exemple de réalisation, les réseaux neuronaux artificiels utilisés par le système d'apprentissage actif et de classification 100 sont des réseaux neuronaux convolutifs CNN (« Convolutional Neural Networks » en anglais). Ce type de réseau neuronal artificiel est particulièrement adapté à la classification de documents image. Dans un autre exemple de réalisation, par exemple pour l'extraction d'information ou la transcription automatique de la parole, les réseaux neuronaux artificiels utilisés par le système d'apprentissage actif et de classification 100 sont des réseaux neuronaux récurrents RNN (« Recurrent Neural Networks » en anglais). Ce type de réseau neuronal artificiel est particulièrement adapté à la classification de documents texte. Les réseaux neuronaux artificiels utilisés par le système d'apprentissage actif et de classification 100 peuvent être intégrés au système d'apprentissage actif et de classification 100 ou être mis à disposition du système d'apprentissage actif et de classification 100 par un système informatique externe.

Le système d'apprentissage actif et de classification 100 est un système d'apprentissage actif et d'analyse automatique destiné à des opérations de classification. Comme déjà indiqué, la parallélisation des modes d'apprentissage actif et de production est applicable à d'autres tâches d'apprentissage machine (« machine learning » en anglais), comme par exemple à de l'extraction d'information.

La Fig. 3 illustre schématiquement un exemple d'architecture matérielle permettant d'implémenter l'architecture modulaire de la Fig. 1. Le système d'apprentissage actif et de classification 100 comprend alors, reliés par un bus de communication 310 : un processeur ou CPU (pour « Central Processing Unit » en anglais) 301, ou une grappe de tels processeurs, comme par exemple des GPU (« Graphics Processing Units » en anglais) ; une mémoire vive RAM (pour « Random Access Memory » en anglais) 302 ; une mémoire morte ROM (pour « Read Only Memory » en anglais) 303, ou une mémoire réinscriptible de type EEPROM (« Electrically Erasable Programmable ROM » en anglais), par exemple de type Flash ; un dispositif de stockage de données, tel qu'un disque dur HDD (pour « Hard Disk Drive » en anglais) 304, ou un lecteur de support de stockage, tel qu'un lecteur de cartes SD (pour « Secure Digital » en anglais) ; un ensemble d'interfaces d'entrées et/ou sorties, telles que des interfaces de communication 305, permettant notamment au système d'apprentissage actif et de classification 100 de recevoir des documents annotés et non-annotés et d'interagir avec l'oracle.

Le processeur 301 est capable d'exécuter des instructions chargées dans la RAM 302 à partir de la ROM 303, d'une mémoire externe (non représentée), d'un support de stockage, tel qu'une carte SD ou le disque dur HDD, ou d'un réseau de communication. Lorsque le système d'apprentissage actif et de classification 100 est mis sous tension, le processeur 301 est capable de lire de la RAM 302 des instructions et de les exécuter. Ces instructions forment un programme d'ordinateur causant l'implémentation, par le processeur 301, des étapes, comportements et algorithmes décrits ici.

Tout ou partie des étapes, comportements et algorithmes décrit ici peut ainsi être implémenté sous forme logicielle par exécution d'un ensemble d'instructions par une machine programmable, telle qu'un DSP (« Digital Signal Processor » en anglais) ou un processeur, ou être implémenté sous forme matérielle par une machine ou un composant (« chip » en anglais) dédié, tel qu'un FPGA (pour « Field-Programmable Gate Array » en anglais) ou un ASIC (pour « Application-Specific Integrated Circuit » en anglais). D'une manière générale, le système d'apprentissage actif et de classification 100 comprend de la circuiterie électronique agencée et configurée pour implémenter les étapes, comportements et algorithmes décrits ici.

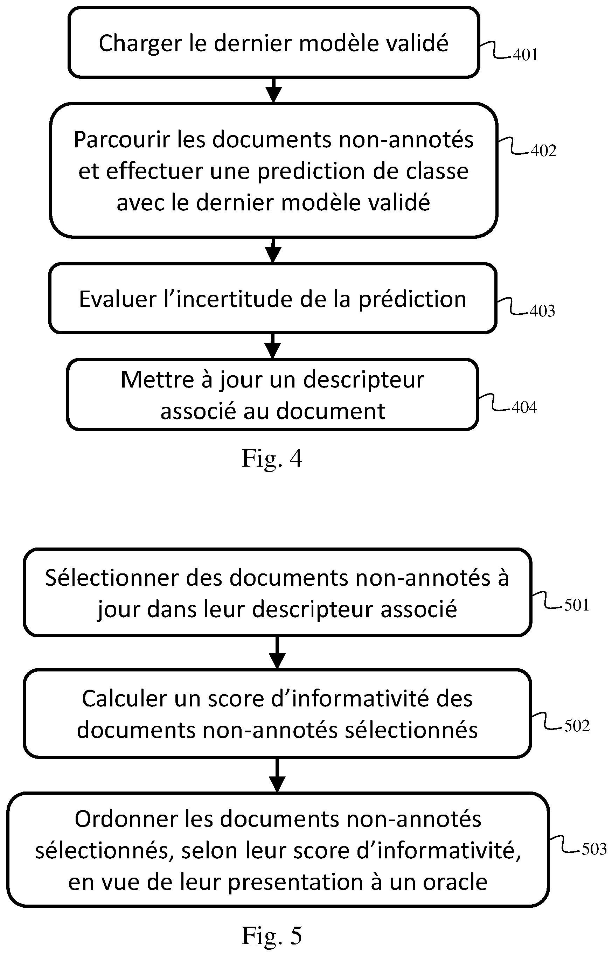

La Fig. 4 illustre schématiquement un algorithme, implémenté par le classifieur C 121, pour dériver des informations, à partir des documents non-annotés, utiles à l'échantillonneur S 120 pour ordonnancer les documents à soumettre pour annotation à l'oracle.

Dans une étape 401, le classifieur C 121 configure un réseau de neurones artificiels en chargeant le dernier modèle validé et disponible dans la quatrième base de données MDB 122, c'est-à-dire le meilleur modèle obtenu par l'entraîneur T 123 jusqu'alors.

Dans une étape 402, le classifieur C 121 parcourt les documents non-annotés dans la première base de données UDB 110 et effectue une prédiction de classification de ces documents grâce au modèle chargé. Dans le cadre de cette prédiction, le classifieur C 121 calcule aussi les vecteurs de représentation (« embeddings » en anglais) des documents en question. Lorsque le module de pré-traitement PP 106 a fourni des vecteurs de représentations (« embeddings ») fixes, le classifieur C 121 calcule les vecteurs de représentation (« embeddings ») dynamiques.

Dans une étape 403, le classifieur C 121 évalue, pour chaque document non-annoté pour lequel une prédiction de classification a été effectuée grâce au dernier modèle validé, une incertitude de prédiction (e.g., entropie).

Dans une étape 404, le classifieur C 121 met à jour le descripteur associé à chaque document non-annoté pour lequel une prédiction de classification a été effectuée grâce au dernier modèle validé. Les descripteurs comportent une information représentative du modèle utilisé pour mettre à jour lesdits descripteurs (i.e., le modèle chargé à l'étape 401). Les descripteurs comportent des informations relatives à une prédiction de classification par le classifieur C 121 desdits documents non-annotés. Les descripteurs comportent ainsi préférentiellement les vecteurs de représentation (« embeddings » en anglais) obtenus selon le modèle de réseau de neurones artificiel auquel lesdits descripteurs se réfèrent, la classification (plus généralement, le résultat d'analyse automatique) obtenue, et des informations d'incertitude d'analyse automatique (e.g., entropie) évaluée à l'étape 403. Les descripteurs peuvent comporter les drapeaux susmentionnés.

L'algorithme de la Fig. 4 est répété tant que la première base de données contient au moins un document non-annoté dont le descripteur associé n'est pas à jour en application du dernier modèle validé par l'entraîneur T 123 et mis à disposition du classifieur C 121 dans la quatrième base de données MDB 122. L'algorithme de la Fig. 4 est ainsi déclenché lorsqu'un ou plusieurs documents non-annotés sont fournis via l'interface d'entrée I1 102.

L'algorithme de la Fig. 4 est interrompu lorsqu'un nouveau modèle, plus performant, a été validé par l'entraîneur T 123 et mis à disposition du classifieur C 121 dans la quatrième base de données MDB 122. L'algorithme de la Fig. 4 est alors réinitialisé et relancé pour mettre à jour les descripteurs des documents non-annotés avec le nouveau modèle.

Les descripteurs mis à jour en application de l'algorithme de la Fig. 4 sont utilisés par l'échantillonneur S 120 afin de sélectionner quels documents non-annotés soumettre pour annotation à l'oracle et dans quel ordre. Cet aspect est décrit ci-après en relation avec la Fig. 5.

Outre la mise à jour des descripteurs, le classifieur C 121 répond aux sollicitations de classification soumises via l'interface d'entrée/sortie IO1 104, en utilisant aussi le meilleur modèle mis à disposition par l'entraîneur T 123. Les modes d'entraînement et de production sont ainsi exécutés en parallèle avec le même modèle de réseau de neurones artificiel comme référence (celui mis à disposition en dernier lieu par l'entraîneur T 123).

La Fig. 5 illustre schématiquement un algorithme d'échantillonnage, implémenté par l'échantillonneur S 120.

Dans une étape 501, l'échantillonneur S 120 sélectionne des documents non-annotés dans la première base de données UDB 110, dont le descripteur est à jour selon le dernier modèle mis à disposition par l'entraîneur T 123. En effet, l'apprentissage actif (« active learning » en anglais) est caractérisé par une recherche spécifique des documents les plus informatifs pour le modèle en construction, au lieu d'effectuer un entraînement sur l'intégralité des documents non-annotés disponibles, et ce afin de réduire le coût des opérations de supervision.

Dans une étape 502, l'échantillonneur S 120 calcule un score d'informativité et d'incertitude pour chaque document sélectionné à l'étape 501. Ce score est représentatif de l'informativité du document et de l'incertitude de prédiction de classification faite par le classifieur C 121. L'informativité du document correspond à sa représentativité par rapport aux documents non-annotés (par exemple calculée sous la forme de la similarité moyenne à ses cent plus proches voisins parmi les documents non-annotés) et/ou sa diversité par rapport aux documents non-annotés (par exemple calculée sous la forme d'une distance au plus proche voisin parmi les documents annotés).

Ainsi, ce score varie de manière inversement proportionnelle à une distance de similarité, cosinus moyenne, avec les autres documents non-annotés. Aussi, ce score varie de manière proportionnelle à une diversité d'informations offerte par rapport aux documents déjà annotés (e.g. pénalisation de proximité avec les documents annotés). Et ce score varie de manière proportionnelle à l'incertitude de prédiction de classification (indiquée dans le descripteur). Par exemple, l'échantillonneur S 120 tient compte de l'entropie dans le calcul du score. En effet, en apprentissage automatique (« machine learning » en anglais), l'entropie est largement utilisée comme mesure d'incertitude. Plus l'entropie est élevée, plus l'incertitude est grande quant à la classification obtenue.

Dans une étape 503, l'échantillonneur S 120 ordonnance dans la troisième base de données SDB 112 les documents non-annotés en fonction de leurs scores d'informativité et d'incertitude calculés à l'étape 502. Des copies desdits documents, ou leurs identifiants, suffisent pour alimenter la troisième base de données SDB 112.

Les documents non-annotés sont alors présentés à l'oracle pour annotation, par valeurs décroissantes du score d'informativité et d'incertitude.

Dans un mode de réalisation particulier, à partir du 2^{e} rang de l'ordonnancement, l'échantillonneur S 120 tient compte de chaque document précédent dans l'ordonnancement pour déterminer un apport en diversité dans le score d'informativité et d'incertitude. Autrement dit, plus l'échantillonneur S 120 avance dans la constitution de l'ordonnancement, plus l'échantillonneur S 120 considère que les documents déjà ordonnancés sont « annotés » pour mettre à jour cet apport en diversité dans le score d'informativité et d'incertitude. Cela évite que des documents quasi-identiques ne se suivent dans l'ordonnancement pour présentation à l'oracle. Cela permet d'accroître les performances malgré la simultanéité de l'échantillonnage et de l'annotation.

L'algorithme de la Fig. 5 est répété tant que la première base de données contient au moins un document non-annoté qui n'a pas été classé dans la troisième base de données SDB 112. L'algorithme de la Fig. 5 est ainsi déclenché lorsqu'un ou plusieurs documents non-annotés sont fournis via l'interface d'entrée I1 102 et que le classifieur C 121 a mis à jour leurs descripteurs respectifs.

L'algorithme de la Fig. 5 est interrompu lorsqu'un nouveau modèle, plus performant, a été validé par l'entraîneur T 123 et mis à disposition du classifieur C 121 dans la quatrième base de données MDB 122. L'algorithme de la Fig. 5 est alors réinitialisé et relancé, pour échantillonner des documents parmi les documents non-annotés de la première base de données UDB 110 dont les descripteurs ont été mis à jour avec le nouveau modèle par le classifieur C 121.

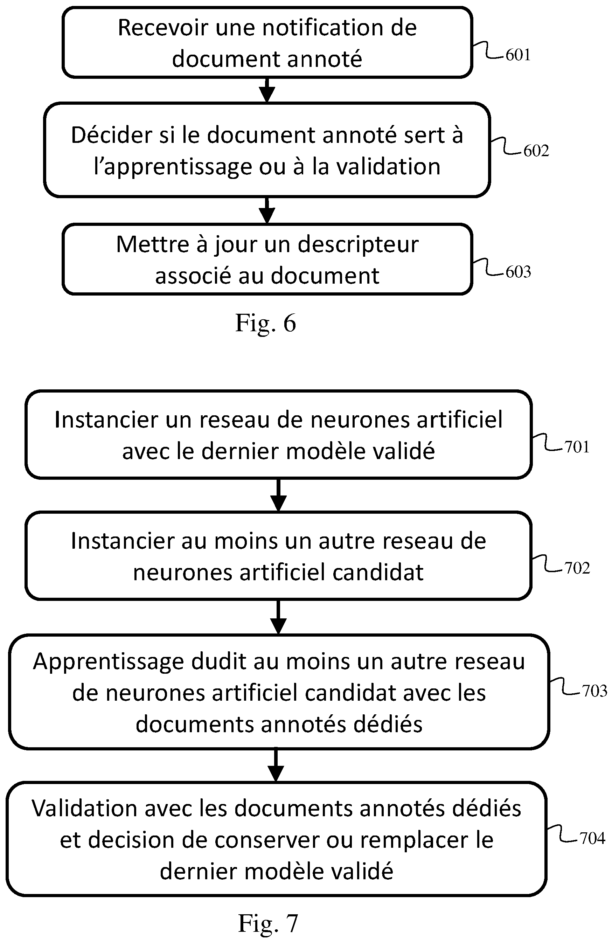

La **Fig. 6** illustre schématiquement un algorithme de répartition de documents annotés dans la base de données dédiée, implémenté par l'échantillonneur S 120. En effet, l'échantillonneur S 120 est aussi en charge de répartir les documents annotés entre le premier ensemble TDS 201, qui sert à l'entraînement, et le second ensemble VDS 202, qui sert à la validation.

Dans une étape 601, l'échantillonneur S 120 reçoit une notification indiquant qu'un nouveau document annoté est disponible, soit reçu via l'interface d'entrée I2 103, soit via l'interface d'entrée/sortie IO2 105 suite à une annotation par l'oracle. La notification est donc par exemple envoyée par la passerelle GW 101.

Dans une étape 602, l'échantillonneur S 120 décide si le document annoté est affecté à l'entraînement ou à la validation. L'échantillonneur S 120 applique pour ce faire des règles préétablies. Par exemple, l'échantillonneur S 120 cherche à obtenir un jeu de documents annotés pour la validation qui soit équilibré en termes de représentation de classes. Selon un autre exemple, l'échantillonneur S 120 distribue les documents annotés au fur et à mesure, en respectant une consigne de balance prédéterminée entre documents affectés à la validation et documents affectés à l'entraînement. L'échantillonneur S 120 construit ainsi à la volée, automatiquement, un jeu de documents utilisés pour l'entraînement et un jeu de documents utilisés pour la validation.

Dans un mode de réalisation particulier et afin de garantir l'équilibre du jeu de validation, l'échantillonneur S 120 est configuré avec un hyperparamètre R qui représente une consigne de taux de documents annotés affectés à la validation par rapport à l'ensemble des documents annotés disponibles. Lorsqu'un nouveau document est annoté avec une annotation A (e.g., classe), l'échantillonneur S 120 calcule un premier score qui rend compte de la proximité entre le ratio de consigne R et le ratio actuel pour cette annotation A. l'échantillonneur S 120 calcule un autre score relatif au manque de représentation de l'annotation A dans le jeu de validation pour qu'il soit équilibré. L'échantillonneur S 120 détermine l'affectation entre entraînement et validation en fonction de ces deux scores, par exemple en considérant leur produit par rapport à un seuil prédéfini.

Dans un mode de réalisation particulier, lorsque les annotations ne sont pas nécessairement mutuellement exclusives, l'échantillonneur S 120 tient compte dans le calcul des scores ci-dessus de la population de documents annotés avec l'annotation A mais aussi de la population de documents annotés à une autre annotation qui n'est pas mutuellement exclusive avec l'annotation A.

Dans un mode de réalisation particulier, l'échantillonneur S 120 tient compte de la diversité du jeu de validation ou de la représentativité du jeu de validation par rapport à l'ensemble des documents annotés.

Dans une étape 603, l'échantillonneur S 120 met à jour un descripteur associé au document annoté dans la deuxième base de données LDB 111. Le descripteur indique si le document a été affecté à l'entraînement ou à la validation.

Ainsi, l'échantillonneur S 120 met automatiquement à disposition de l'entraîneur T 123, deux jeux de documents distincts lui permettant respectivement d'auto-entraîner et d'auto-évaluer des structures alternatives de réseaux de neurones artificiels, afin de chercher en permanence à trouver un meilleur modèle de classification.

La **Fig.** 7 illustre schématiquement un algorithme, implémenté par l'entraîneur T 123, de construction et d'évaluation d'un nouveau modèle de réseau de neurones artificiel (mode d'apprentissage) visant à remplacer un modèle en cours d'utilisation par le classifieur C 121 (mode de production).

Dans une étape 701, l'entraîneur T 123 instancie un réseau de neurones artificiel avec le dernier modèle validé.

Dans une étape 702, l'entraîneur T 123 instancie un autre réseau de neurones artificiel, de structure aléatoire. Cet autre réseau de neurones artificiel est un candidat pour remplacer le dernier modèle validé. Cet autre réseau de neurones artificiel peut inclure la partie pré-entraînée susmentionnée (le reste de la structure étant alors aléatoire), pour en accélérer son entraînement.

Dans une étape 703, l'entraîneur T 123 entraîne le réseau de neurones artificiel candidat avec les documents annotés du premier ensemble TDS 201 de la deuxième base de données LDB 111.

Dans une étape 704, l'entraîneur T 123 effectue la validation du réseau de neurones artificiel avec le dernier modèle validé, instancié à l'étape 701, en utilisant les documents annotés du second ensemble VDS 202 de la deuxième base de données LDB 111. L'entraîneur T 123 effectue aussi la validation du réseau de neurones artificiel candidat, entraîné à l'étape 702, en utilisant les mêmes documents annotés du second ensemble VDS 202 de la deuxième base de données LDB 111. Si le réseau de neurones artificiel candidat montre de meilleures performances pendant la validation, l'entraîneur T 123 stocke un modèle correspondant dans la quatrième base de données MDB 122 en remplacement du modèle précédent. Sinon, l'entraîneur T 123 peut attendre que de nouveaux documents annotés soient affectés à l'entraînement ou à la validation, pour évaluer si la poursuite de l'apprentissage peut conduire à un meilleur modèle. En alternative, l'entraîneur T 123 peut tirer aléatoirement une nouvelle structure de réseau de neurones artificiel comme nouveau candidat.

L'entraîneur T 123 applique préférentiellement des règles de décision concernant la poursuite ou non de l'entraînement d'un réseau de neurones artificiels, de sorte notamment à ne pas boucler éternellement sur un candidat qui n'apporterait pas d'amélioration ou de ne pas faire de sur-apprentissage (« overfitting » en anglais). Par exemple, l'entraîneur T 123 applique des règles d'arrêt anticipé basé sur la validation (« validation-based early stopping » en anglais), qui peuvent combiner des critères de nombre d'étapes d'entrainement réalisées et de nombre de tours d'apprentissage, appelés « époques » (« epoch » en anglais). Une époque correspond donc à une utilisation de l'ensemble des documents annotés dédiés à l'entraînement.

Comme déjà mentionné, l'entraîneur T 123 peut entraîner et évaluer plusieurs structures de réseaux de neurones artificiels en parallèle.

A l'initialisation du système d'apprentissage actif et de classification 100, aucun modèle n'a été validé. L'entraîneur T 123 débute l'entraînement d'un réseau de neurones artificiel de structure arbitraire ou aléatoire et le met à disposition du classifieur C 121 lorsque la performance de classification arrête de s'améliorer pendant un nombre prédéfini d'étapes d'entraînement, ou lorsque la variation de performance de classification d'une étape d'entraînement à une autre est inférieure à un seuil prédéfini, lorsque la performance de classification a atteint un seuil prédéfini. L'interface d'entrée I2 103 sert à injecter un début de jeu de documents annotés pour permettre le démarrage du système d'apprentissage actif et de classification 100. Tant qu'aucun modèle n'a été validé, l'échantillonneur S 120 présente les documents non-annotés, pour annotation par l'oracle, dans un ordre aléatoire dans la base de données

L'interface d'entrée I2 103 sert aussi lorsqu'au moins une nouvelle classe doit être apprise. Dans ce cas, des documents classifiés dans cette nouvelle classe, et annotés en conséquence, sont injectés via l'interface d'entrée I2 103. L'impact sur l'apprentissage est alors suffisamment important pour qu'un nouveau modèle plus performant soit rapidement mis à disposition par l'entraîneur T 123, quitte à ce que ce modèle soit ensuite successivement amélioré avec le raffinement de l'apprentissage au regard de cette nouvelle classe.

## Revendications

1. Procédé implémenté par un système d'apprentissage actif et d'analyse automatique, le procédé exécutant en parallèle un mode d'apprentissage et un mode de production, le mode de production incluant :
- répondre à des sollicitations d'analyse automatique de documents en utilisant un modèle d'apprentissage machine entraîné avec des documents annotés ;
et le mode d'apprentissage incluant :
- recevoir et stocker des documents non-annotés ;
- mettre à jour un descripteur, stocké en association avec les documents non-annotés, avec des informations relatives à une prédiction, selon le modèle utilisé en mode de production, d'analyse automatique desdits documents non-annotés ;
- échantillonner les documents non annotés stockés dont le descripteur a été mis à jour selon le modèle utilisé en mode de production, et déterminer un ordonnancement, selon les informations relatives à la prédiction d'analyse automatique, les documents non-annotés échantillonnés pour annotation par un oracle ;
- répartir les documents annotés entre documents à utiliser en entraînement pour entraîner au moins un modèle d'apprentissage machine candidat et documents à utiliser en validation pour comparer les performances dudit au moins un modèle d'apprentissage machine candidat avec le modèle utilisé en mode de production ;
- entraîner ledit au moins un modèle d'apprentissage machine candidat de structure aléatoire, et lorsque le modèle d'apprentissage machine candidat entraîné montre de meilleures performances en validation que le modèle utilisé en mode de production, remplacer le modèle utilisé en mode de production par le modèle d'apprentissage machine candidat entraîné et réitérer en mettant à jour le descripteur selon le modèle remplaçant,
dans lequel lesdits documents sont des images et ladite analyse automatique est une reconnaissance d'au moins un type d'objet dans lesdites images,
**caractérisé en ce que**
le procédé comportant en outre, lorsqu'un document est nouvellement annoté avec une annotation A :
- calculer un premier score qui rend compte de la proximité entre un ratio de consigne R et le ratio actuel pour cette annotation A, les ratios étant représentatifs du nombre de documents annotés utilisés en validation par rapport au nombre total de documents annotés ;
- calculer un deuxième score relatif au manque de représentation de l'annotation A dans les documents utilisés en validation
- déterminer si le document nouvellement annoté est à utiliser en entraînement ou en validation en fonction de ces premier et deuxième scores.

2. Procédé selon la revendication 1, incluant :
- sur remplacement du modèle utilisé en mode de production, interrompre toute opération en cours concernant la mise à jour des descripteurs et l'échantillonnage selon le modèle remplacé.

3. Procédé selon la revendication 1 ou 2, incluant :
- effectuer un pré-traitement sur réception des documents non annotés, qui récupère des cartes d'activation obtenues selon une partie pré-entraînée qui est commune aux modèles d'apprentissage machine et qui est appliquée aux documents non annotés reçus, et inscrit, dans les descripteurs associés auxdits documents non-annotés des vecteurs de représentation résultant de la partie pré-entraînée.

4. Procédé selon l'une quelconque des revendications 1 à 3, incluant :
- créer plusieurs instances d'entraînement qui opèrent en parallèle pour entraîner des modèles d'apprentissage machine de structures aléatoires différentes.

5. Procédé selon l'une quelconque des revendications 1 à 4, incluant :
- créer plusieurs instances d'analyse automatique qui opèrent en parallèle avec le modèle utilisé en mode de production, pour répartir des opérations de mise à jour des descripteurs en mode d'apprentissage et des opérations de réponse à des sollicitations d'analyse automatique de documents en mode de production.

6. Procédé selon l'une quelconque des revendications 1 à 5, dans lequel la constitution de l'ordonnancement avance, plus les documents déjà ordonnancés sont considérés comme annotés pour mettre à jour un apport en diversité dans un score d'informativité et d'incertitude.

7. Procédé selon l'une quelconque des revendications 1 à 6, dans lequel l'analyse automatique est une classification.

8. Produit programme d'ordinateur comportant des instructions pour implémenter le procédé selon l'une quelconque des revendications 1 à 7, lorsque lesdites instructions sont exécutées par un processeur.

9. Support de stockage d'informations stockant un programme d'ordinateur comportant des instructions pour implémenter le procédé selon l'une quelconque des revendications 1 à 7, lorsque lesdites instructions sont lues depuis le support de stockage d'informations et exécutées par un processeur.

10. Système d'apprentissage actif et d'analyse automatique incluant de la circuiterie électronique configurée pour exécuter en parallèle un mode d'apprentissage et un mode de production, le mode de production incluant :
- répondre à des sollicitations d'analyse automatique de documents en utilisant un modèle d'apprentissage machine entraîné avec des documents annotés ;
et le mode d'apprentissage incluant :
- recevoir et stocker des documents non-annotés ;
- mettre à jour un descripteur, stocké en association avec les documents non-annotés, avec des informations relatives à une prédiction, selon le modèle utilisé en mode de production, d'analyse automatique desdits documents non-annotés ;
- échantillonner les documents non annotés stockés dont le descripteur a été mis à jour selon le modèle utilisé en mode de production, et déterminer un ordonnancement, selon les informations relatives à la prédiction d'analyse automatique, des documents non-annotés échantillonnés pour annotation par un oracle ;
- répartir les documents annotés entre documents à utiliser pour entraîner au moins un modèle d'apprentissage machine candidat et documents à utiliser pour comparer les performances dudit au moins un modèle d'apprentissage machine candidat avec le modèle utilisé en mode de production ;
- entraîner ledit au moins un modèle d'apprentissage machine candidat de structure aléatoire, et lorsque le modèle d'apprentissage machine candidat entraîné montre de meilleures performances en validation que le modèle utilisé en mode de production, remplacer le modèle utilisé en mode de production par le modèle d'apprentissage machine candidat entraîné et réitérer en mettant à jour le descripteur selon le modèle remplaçant,
dans lequel lesdits documents sont des images et ladite analyse automatique est une reconnaissance d'au moins un type d'objet dans lesdites images,
**caractérisé en ce que** le système d'apprentissage comportant en outre de la circuiterie électronique configurée pour, lorsqu'un document est nouvellement annoté avec une annotation A :
- calculer un premier score qui rend compte de la proximité entre un ratio de consigne R et le ratio actuel pour cette annotation A, les ratios étant représentatifs du nombre de documents annotés utilisés en validation par rapport au nombre total de documents annotés ;
- calculer un deuxième score relatif au manque de représentation de l'annotation A dans les documents utilisés en validation
- déterminer si le document nouvellement annoté est à utiliser en entraînement ou en validation en fonction de ces premier et deuxième scores.

## Patentansprüche

1. Verfahren, das durch ein System zum aktiven Lernen und zur automatischen Analyse implementiert wird, wobei das Verfahren parallel einen Lernmodus und einen Produktionsmodus ausführt, wobei der Produktionsmodus Folgendes beinhaltet:
- Beantworten von Anforderungen zur automatischen Analyse von Dokumenten unter Verwendung eines Maschinenlernmodells, das mit annotierten Dokumenten trainiert wurde;
und wobei der Lernmodus Folgendes beinhaltet:
- Empfangen und Speichern von nicht annotierten Dokumenten;
- Aktualisieren eines Deskriptors, der in Zuordnung zu den nicht annotierten Dokumenten gespeichert ist, mit Informationen bezüglich einer Vorhersage, gemäß dem im Produktionsmodus verwendeten Modell, für eine automatische Analyse der nicht annotierten Dokumente;
- Sampling der gespeicherten nicht annotierten Dokumente, deren Deskriptor gemäß dem im Produktionsmodus verwendeten Modell aktualisiert wurde, und Bestimmen einer Reihung, gemäß den Informationen bezüglich der Vorhersage für eine automatische Analyse, für die gesampelten nicht annotierten Dokumente zur Annotation durch ein Orakel;
- Aufteilen der annotierten Dokumente in Dokumente, die beim Trainieren zum Trainieren mindestens eines Kandidaten-Maschinenlernmodells zu verwenden sind, und Dokumente, die zur Validierung zu verwenden sind, um die Leistungen des mindestens einen Kandidaten-Maschinenlernmodells mit dem im Produktionsmodus verwendeten Modell zu vergleichen;
- Trainieren des mindestens einen Kandidaten-Maschinenlernmodells mit zufälliger Struktur und, wenn das trainierte Kandidaten-Maschinenlernmodell bei der Validierung bessere Leistungen zeigt als das im Produktionsmodus verwendete Modell, Ersetzen des im Produktionsmodus verwendeten Modells durch das trainierte Kandidaten-Maschinenlernmodell und Wiederholen, indem der Deskriptor gemäß dem Ersatzmodell aktualisiert wird, wobei die Dokumente Bilder sind und die automatische Analyse eine Erkennung mindestens eines Objekttyps in den Bildern ist,
**dadurch gekennzeichnet, dass** das Verfahren ferner, wenn ein Dokument neu mit einer Annotation A annotiert wird, umfasst:
- Berechnen eines ersten Scores, der die Nähe zwischen einem Sollverhältnis R und dem aktuellen Verhältnis für diese Annotation A wiedergibt, wobei die Verhältnisse repräsentativ für die Anzahl der bei der Validierung verwendeten annotierten Dokumente in Bezug auf die Gesamtzahl von annotierten Dokumenten ist;
- Berechnen eines zweiten Scores bezüglich der mangelnden Repräsentation der Annotation A in den bei der Validierung verwendeten Dokumenten
- Bestimmen in Abhängigkeit von diesen ersten und zweiten Scores, ob das neu annotierte Dokument beim Trainieren oder Validieren zu verwenden ist.

2. Verfahren nach Anspruch 1, beinhaltend:
- beim Ersetzen des im Produktionsmodus verwendeten Modells, das Unterbrechen aller laufenden Vorgänge betreffend die Aktualisierung der Deskriptoren und das Sampling gemäß dem ersetzten Modell.

3. Verfahren nach Anspruch 1 oder 2, beinhaltend:
- Durchführen einer Vorverarbeitung beim Empfangen von nicht annotierten Dokumenten, die Aktivierungskarten wiederherstellt, die gemäß einem vortrainierten Teil erhalten werden, der den Maschinenlernmodellen gemeinsam ist und der auf die empfangenen nicht annotierten Dokumente angewendet wird, und in die den nicht annotierten Dokumenten zugeordneten Deskriptoren Repräsentationsvektoren einträgt, die aus dem vortrainierten Teil resultieren.

4. Verfahren nach einem der Ansprüche 1 bis 3, beinhaltend:
- Erstellen von mehreren Trainingsinstanzen, die parallel arbeiten, um Maschinenlernmodelle mit verschiedenen zufälligen Strukturen zu trainieren.

5. Verfahren nach einem der Ansprüche 1 bis 4, beinhaltend:
- Erstellen von mehreren Instanzen zur automatischen Analyse, die parallel zu dem im Produktionsmodus verwendeten Modell arbeiten, um Vorgänge zur Aktualisierung der Deskriptoren im Lernmodus und Vorgänge zur Beantwortung von Anforderungen zur automatischen Analyse von Dokumenten im Produktionsmodus aufzuteilen.

6. Verfahren nach einem der Ansprüche 1 bis 5, wobei das Bilden der Reihung fortschreitet, je mehr die bereits gereihten Dokumente als annotiert betrachtet werden, um einen Diversitätsbeitrag in einem Informativitäts- und Unsicherheitsscore zu aktualisieren.

7. Verfahren nach einem der Ansprüche 1 bis 6, wobei die automatische Analyse eine Klassifizierung ist.

8. Computerprogrammprodukt, das Anweisungen umfasst, die bei der Ausführung der Anweisungen durch einen Prozessor das Verfahren nach einem der Ansprüche 1 bis 7 implementieren.

9. Informationsspeichermedium, das ein Computerprogramm speichert, das Anweisungen umfasst, die beim Lesen der Anweisungen von dem Informationsspeichermedium und Ausführen durch einen Prozessor das Verfahren nach einem der Ansprüche 1 bis 7 implementieren.

10. System zum aktiven Lernen und zur automatischen Analyse, das eine elektronische Schaltungsanordnung beinhaltet, die dazu ausgelegt ist, parallel einen Lernmodus und einen Produktionsmodus auszuführen, wobei der Produktionsmodus Folgendes beinhaltet:
- Beantworten von Anforderungen zur automatischen Analyse von Dokumenten unter Verwendung eines Maschinenlernmodells, das mit annotierten Dokumenten trainiert wurde;
und wobei der Lernmodus Folgendes beinhaltet:
- Empfangen und Speichern von nicht annotierten Dokumenten;
- Aktualisieren eines Deskriptors, der in Zuordnung zu den nicht annotierten Dokumenten gespeichert ist, mit Informationen bezüglich einer Vorhersage, gemäß dem im Produktionsmodus verwendeten Modell, für eine automatische Analyse der nicht annotierten Dokumente;
- Sampling der gespeicherten, nicht annotierten Dokumente, deren Deskriptor gemäß dem im Produktionsmodus verwendeten Modell aktualisiert wurde, und Bestimmen einer Reihung, gemäß den Informationen bezüglich der Vorhersage für eine automatische Analyse, der gesampelten nicht annotierten Dokumente zur Annotation durch ein Orakel;
- Aufteilen der annotierten Dokumente in Dokumente, die zum Trainieren mindestens eines Kandidaten-Maschinenlernmodells zu verwenden sind, und Dokumente, die zu verwenden sind, um die Leistungen des mindestens einen Kandidaten-Maschinenlernmodells mit dem im Produktionsmodus verwendeten Modell zu vergleichen;
- Trainieren des mindestens einen Kandidaten-Maschinenlernmodells mit zufälliger Struktur und, wenn das trainierte Kandidaten-Maschinenlernmodell bei der Validierung bessere Leistungen zeigt als das im Produktionsmodus verwendete Modell, Ersetzen des im Produktionsmodus verwendeten Modells durch das trainierte Kandidaten-Maschinenlernmodell und Wiederholen, indem der Deskriptor gemäß dem Ersatzmodell aktualisiert wird, wobei die Dokumente Bilder sind und die automatische Analyse eine Erkennung mindestens eines Objekttyps in den Bildern ist,
**dadurch gekennzeichnet, dass** das Lernsystem ferner eine elektronische Schaltungsanordnung umfasst, die, wenn ein Dokument neu mit einer Annotation A annotiert wird, ausgelegt ist zum:
- Berechnen eines ersten Scores, der die Nähe zwischen einem Sollverhältnis R und dem aktuellen Verhältnis für diese Annotation A wiedergibt, wobei die Verhältnisse repräsentativ für die Anzahl der bei der Validierung verwendeten annotierten Dokumente in Bezug auf die Gesamtzahl von annotierten Dokumenten ist;
- Berechnen eines zweiten Scores bezüglich der mangelnden Repräsentation der Annotation A in den bei der Validierung verwendeten Dokumenten
- Bestimmen in Abhängigkeit von diesen ersten und zweiten Scores, ob das neu annotierte Dokument beim Trainieren oder Validieren zu verwenden ist.

## Claims

1. Method implemented by an active learning and automatic analysis system, the method executing a learning mode and a production mode in parallel, the production mode including:
- responding to requests for the automatic analysis of documents using a machine learning model trained with annotated documents;
and the learning mode including:
- receiving and storing non-annotated documents;
- updating a descriptor, stored in association with the non-annotated documents, with information relating to a prediction, in accordance with the model used in production mode, for the automatic analysis of said non-annotated documents;
- sampling the stored non-annotated documents whose descriptor has been updated in accordance with the model used in production mode, and determining an order, in accordance with the information relating to the automatic analysis prediction, of the sampled non-annotated documents for annotation by an oracle;
- distributing the annotated documents between documents to be used in training mode for training at least one candidate machine learning model and documents to be used in validation mode for comparing the performance of said at least one candidate machine learning model with the model used in production mode;
- training said at least one randomly structured candidate machine learning model, and when the trained candidate machine learning model exhibits better performance in terms of validation than the model used in production mode, replacing the model used in production mode with the trained candidate machine learning model and reiterating by updating the descriptor in accordance with the replacement model, wherein said documents are images and said automatic analysis is recognition of at least one object type in said images,
**characterized in that** the method furthermore comprises, when a document is newly annotated with an annotation A:
- computing a first score that takes account of the proximity between a setpoint ratio R and the current ratio for this annotation A, the ratios being representative of the number of annotated documents used in validation mode in comparison with the total number of annotated documents;
- computing a second score relating to the lack of representation of the annotation A in the documents used in validation mode;
- determining whether the newly annotated document should be used in training mode or in validation mode on the basis of these first and second scores.

2. Method according to Claim 1, including:
- upon replacement of the model used in production mode, interrupting any ongoing operation regarding the updating of the descriptors and the sampling in accordance with the replaced model.

3. Method according to Claim 1 or 2, including:
- performing preprocessing upon receiving the non-annotated documents, which retrieves activation maps that are obtained using a pre-trained portion that is common to the machine learning models and that is applied to the received non-annotated documents, and writes, to the descriptors associated with said non-annotated documents, embeddings resulting from the pre-trained portion.

4. Method according to any one of Claims 1 to 3, including:
- creating multiple training instances that operate in parallel so as to train machine learning models of different random structures.

5. Method according to any one of Claims 1 to 4, including:
- creating multiple automatic analysis instances that operate in parallel with the model used in production mode, so as to distribute operations of updating the descriptors in learning mode and operations of responding to requests for the automatic analysis of documents in production mode.

6. Method according to any one of Claims 1 to 5, wherein the formation of the order moves forward the more the already ordered documents are considered to be annotated so as to update a diversity contribution in an informativeness and uncertainty score.

7. Method according to any one of Claims 1 to 6, wherein the automatic analysis is a classification.

8. Computer program product comprising instructions for implementing the method according to any one of Claims 1 to 7 when said instructions are executed by a processor.

9. Information storage medium storing a computer program comprising instructions for implementing the method according to any one of Claims 1 to 7 when said instructions are read from the information storage medium and executed by a processor.

10. Active learning and automatic analysis system including electronic circuitry configured so as to execute a learning mode and a production mode in parallel, the production mode including:
- responding to requests for the automatic analysis of documents using a machine learning model trained with annotated documents;
and the learning mode including:
- receiving and storing non-annotated documents;
- updating a descriptor, stored in association with the non-annotated documents, with information relating to a prediction, in accordance with the model used in production mode, for the automatic analysis of said non-annotated documents;
- sampling the stored non-annotated documents whose descriptor has been updated in accordance with the model used in production mode, and determining an order, in accordance with the information relating to the automatic analysis prediction, of the sampled non-annotated documents for annotation by an oracle;
- distributing the annotated documents between documents to be used for training at least one candidate machine learning model and documents to be used for comparing the performance of said at least one candidate machine learning model with the model used in production mode;
- training said at least one randomly structured candidate machine learning model, and when the trained candidate machine learning model exhibits better performance in terms of validation than the model used in production mode, replacing the model used in production mode with the trained candidate machine learning model and reiterating by updating the descriptor in accordance with the replacement model, wherein said documents are images and said automatic analysis is recognition of at least one object type in said images,
**characterized in that** the learning system furthermore comprises electronic circuitry configured, when a document is newly annotated with an annotation A, to:
- compute a first score that takes account of the proximity between a setpoint ratio R and the current ratio for this annotation A, the ratios being representative of the number of annotated documents used in validation mode in comparison with the total number of annotated documents;
- compute a second score relating to the lack of representation of the annotation A in the documents used in validation mode;
- determine whether the newly annotated document should be used in training mode or in validation mode on the basis of these first and second scores.
